# EUROPÄISCHE PATENTSCHRIFT

(11) **EP 4 508 267 B1**
(45) Veröffentlichungstag und Bekanntmachung des Hinweises auf die Patenterteilung: **18.03.2026**
(21) Anmeldenummer: 23718983.2
(22) Anmeldetag: 05.04.2023
(51) Int. Cl.: D21F 1/40, D21F 3/02, D21F 3/10, D21G 1/02, D21G 9/00

(54) **VERFAHREN ZUM EINSTELLEN**
METHOD FOR ADJUSTMENT
PROCÉDÉ DE RÉGLAGE

(30) Priorität: 11.04.2022 DE 102022108709
(43) Veröffentlichungstag der Anmeldung: 19.02.2025
(73) Patentinhaber: Voith Patent GmbH, 89522 Heidenheim (DE)
(72) Erfinder: CAMPOS SOUZA, José Luiz, 89518 Heidenheim (DE); ERKELENZ, Marc, 89231 Neu-Ulm (DE); STENITSCHKA, Marc-Oliver, 89428 Syrgenstein (DE)
(74) Vertreter: Voith Patent GmbH - Patentabteilung
(86) Internationale Anmeldenummer: PCT/EP2023/058914
(87) Internationale Veröffentlichungsnummer: WO 2023/198541

(56) Entgegenhaltungen:
- EP-A1- 1 693 509
- EP-A1- 3 875 683
- DE-A1- 102011 075 806

## Beschreibung

Die Erfindung betrifft ein Verfahren zum Einstellen eines Bauteils, insbesondere einer Funktionswalze, für eine Maschine zur Herstellung oder Verarbeitung einer Faserstoffbahn gemäß Anspruch 1
In Maschinen zur Herstellung oder Verarbeitung einer Faserstoffbahn, insbesondere in Papiermaschinen, kommen etliche Bauteile zum Einsatz, die im Betrieb der Anlage abhängig von den aktuellen Produktionsbedingungen verstellt oder angepasst werden müssen. Zu diesen Bauteilen zählt einer Vielzahl verschiedener Funktionswalzen, wie z.B. Saugwalzen, Breitstreckwalzen, Biegeausgleichswalzen oder auch Schuhwalzen. Um diese Anpassung zu bewerkstelligen, weisen diese Bauteile entsprechend Verstelleinrichtungen auf.

Die Schriften EP 1 693 509 A1, EP 3 875 683 A1 sowie DE 10 2011 075806 A1 zeigen Möglichkeiten zur Regelung von Saugwalzen.

Häufig ist das Bedienen der Verstelleinrichtungen aber nicht intuitiv möglich. So können beispielsweise bei Saugwalzen die innenliegenden Saugkasten- und Dichtleistenpositionen zwar von außen mittels einer mechanischen Verstellung verändert werden. Derartige Saugwalzen sowie die verstellbaren Dichtleisten und Formatbegrenzer sind beispielsweise in den Schriften DE 10 2009 000 371 oder EP2707544 B1 beschrieben. Die Lage der Dichtleisten, und damit die Positionierung der Region des Walzenmantels, an der der Unterdruck anliegt, bei Saugpresswalzen zum Beispiel ist wichtig, um die optimale Entwässerung der Papierbahn zu ermöglichen. Durch eine falsche Positionierung des Saugkastens kann der Trockengehalt der Faserstoffbahn 1-2%-Punkte niedriger liegen als bei optimaler Positionierung, was einen massiven Effizienzverlust der Presse darstellt. Es ist allerdings weder direkt erkennbar, wo genau die Ist-Position des Saugkastens bzw. der Leisten ist, noch welcher Effekt durch die Verstellung bewirkt wird. Eine Beurteilung erfolgt in der Regel indirekt durch Beobachten und Bewerten der durch die Verstellung erzielten Auswirkungen.

Somit erfordert eine solche Verstellung oft den Einsatz von entsprechend ausgebildetem und erfahrenem Personal. Der Einsatz dieser qualifizierten Fachkräfte ist jedoch kostenintensiv. Zudem stellt die Verfügbarkeit dieses Personals einen Engpassfaktor dar.

**In** der noch unveröffentlichten Patentanmeldung DE 102021104870.2 hat die Anmelderin ein Verfahren beschrieben, um bei besaugten Walzen die innenliegenden, nicht sichtbaren Dichtleisten und Formatbegrenzer mittels sogenannter Augmented Reality (AR) sichtbar zu machen, und damit dem Bediener eine wertvolle Orientierung bei der Einstellung der Leistenpositionen zu geben.

Es besteht jedoch der Bedarf, die Einstellung bei Saugwalzen weiter zu vereinfachen. Zudem besteht der Bedarf, auch bei anderen Bauteilen in einer Papiermaschine, insbesondere bei weiteren Funktionswalzen, dem Bedienpersonal das optimale und auch reproduzierbare Einstellen der Bauteile zu vereinfachen.

Die Aufgabe der Erfindung ist es, den Stand der Technik hinsichtlich dieses Bedarfes zu verbessern.

Die Aufgabe wird erfindungsgemäß durch eine Ausführung entsprechend dem unabhängigen Anspruch gelöst. Weitere vorteilhafte Ausführungsformen der vorliegenden Erfindung finden sich in den Unteransprüchen.

Zur Lösung der Aufgabe wird ein Verfahren zum Einstellen eines Bauteils, insbesondere einer Funktionswalze, für eine Maschine zur Herstellung oder Verarbeitung einer Faserstoffbahn vorgeschlagen,
wobei das Bauteil zumindest eine Verstelleinrichtung zum Einstellen eines Betriebszustandes des Bauteils aufweist,
wobei das Verfahren die folgenden Schritte umfasst:
   - Bild- und/oder Videoaufnahme vom Äußeren des Bauteils und Übermittlung der Aufnahme an eine Berechnungseinheit
   - Ermittlung eines Ist-Wertes des Betriebszustands mittels der Berechnungseinheit durch Bildanalyse der Bild- und/oder Videoaufnahme vom Äußeren des Bauteils und/oder durch die Erfassung von Werten eingebetteter Sensorik
   - Auf Basis der ermittelten Ist-Werte des Betriebszustands: Darstellung von Metainformationen zum Einstellen der Verstelleinrichtung durch Überlagerung mit der Bild- und/oder Videoaufnahme auf einem Display

Es kann dabei vorgesehen sein, dass der Ist-Wert des Betriebszustands allein aus der Bild- oder Videoaufnahme des Bauteils ermittelt wird. Dies ist insbesondere bei Bauteilen vorteilhaft, bei denen sich durch ihre Form sehr einfach Rückschlüssen auf ihre aktuellen Einstellungen treffen lassen.

Alternativ kann aber auch vorgesehen sein, dass am Äußeren des Bauteils oder in dessen direkter Umgebung an einer definierten Position ein Markerelement angebracht ist, und dieses Markerelement bei der Bild- und/oder Videoaufnahme miterfasst wird.

Bei dem Markerelement kann es sich beispielsweise um ein speziell geformtes geometrisches Objekt handeln, das von der Bildanalyse zuverlässig erkannt und eindeutig identifiziert werden kann. Auf Basis der Position des Markerelements kann dann der Ist-Wert des Betriebszustands, beispielsweise die exakte Positionierung einer Funktionswalze ermittelt werden.

Dabei kann das Markerelement entweder fest an dem jeweiligen Bauteil verbleiben, oder auch so konstruiert sein, dass das Markerelement einfach abmontierbar ist. Somit kann es nach der Einstellung des Bauteil wieder abgezogen werden und stört nicht den weiteren den Betrieb der Maschine. Ebenfalls verschmutzt das Markerelement nicht unnötig, was eine Erkennung gegebenenfalls erschwert und ungenau macht. Als weiteren Vorteil kann das Markerelement bei unbeabsichtigten Lösen keinen Schaden verursachen.

Die Bildanalyse und/oder die Ermittlung des Ist-Werts kann vorteilhafterweise auf der Berechnungseinheit in Echtzeit oder mit einem geringen Zeitversatz (z.B. weniger als 10 Sekunden) erfolgen. So steht dem Bedienpersonal die Metainformation direkt auf dem Bildschirm zur Verfügung.

Die Einstellung der Verstelleinrichtung kann dann durch Bedienpersonal vorgenommen, oder automatisch über eine Steuerung erfolgen.

Häufig wird der Prozess ein iterativer Prozess sein. Nach der Einstellung der Verstelleinrichtung kann wieder eine Bild- und/oder Videoaufnahme vom Äußeren des Bauteils erstellt werden, und ein neuer Ist-Wert für den Betriebszustand des Bauteils ermittelt werden. Auf Basis der ermittelten Ist-Werte des neuen Betriebszustands kann eine erneute Darstellung von Metainformationen zum Einstellen der Verstelleinrichtung durch Überlagerung mit der Bild- und/oder Videoaufnahme auf einem Display erfolgen, falls die erste Einstellung nicht zum gewünschten Zielpunkt geführt hat.

Diese Iterationsschritte können je nach Bedarf zweimal, dreimal oder öfter durchgeführt werden.

Weiterhin kann es vorteilhaft sein, dass ein Datenbanksystem vorgesehen ist, und die Berechnungseinheit zur Ermittlung der Metainformationen auf das Datenbanksystem zugreift. Hierbei ist es insbesondere vorteilhaft, wenn das Bauteil ein **ID** Kennzeichen, zum Beispiels in Form eines QR-Codes oder eines **RFID** Chips aufweist. Dieses **ID** Kennzeichen kann vorteilhafterweise mit dem gleichen Gerät erfasst werden, mit dem die Bild- oder Videoaufnahme erfolgt. Dabei kann es sich insbesondere um ein Smartphone, Tablett oder ähnliches handeln.

Über die **ID** Kennzeichnung des Bauteils können aus dem Datenbanksystem weitere Informationen zu diesem Bauteil ausgelesen werden, und auch in die Ermittlung des Ist-Zustandes eingehen.

Zudem ist es auch möglich, dass der Ist-Wert des Betriebszustands in dem Datenbanksystem abgespeichert wird. Auch dazu ist die **ID** Kennzeichnung vorteilhaft.

Die Metainformationen, die auf dem Display dargestellt werden, können entweder anhand eines hinterlegten Algorithmus oder anderer geeigneter Zusammenhangsbeziehungen durch die bzw. eine Berechnungseinheit berechnet werden. Alternativ oder zusätzlich können auch in einem Datenbanksystem historische bzw. optimale Werte hinterlegt sein. Die Bereitstellung der Metainformationen kann dann durch Vergleich mit den hinterlegten historischen Werten erfolgen.

Zur Verbesserung der Qualität der Metainformationen kann es auch möglich sein, dass von einem geschulten Bediener die hinterlegten historischen Werte direkt korrigiert werden. Stellt sich nämlich bei der Einstellung eines Bauteils heraus, dass die über die Metainformation vorgegebenen Einstellparameter nicht zu dem gewünschten optimalen Ergebnis führen (was z.B. durch Verschleiß oder unsauber ausgeführte Wartungsarbeiten passieren kann), so kann ein erfahrener Experte manuell die optimale Einstellung vornehmen. Vorteilhafterweise können dann die neuen optimalen Werten von der Berechnungseinheit and das Datenbanksystem übertragen, und dort als neuer Standard hinterlegt werden. Auf diese Weise kann ohne großen Aufwand ein lernendes System entstehen, und auch unerfahrene Bediener können auf das aktuelle Fachwissen der Experten zurückgreifen.

Bevorzugt sind in dem Datenbanksystem auch noch andere Betriebsparameter der Maschine hinterlegt, wie z.B. Produktinformationen, Produktionsgeschwindigkeit, Rohstoffdaten, Qualitätsparameter, Sensordaten etc.. Dadurch kann die Qualität der Metadaten in der Regel deutlich verbessert werden, da sich in etlichen Anwendungen die optimalen Einstellungen in Abhängigkeit dieser Betriebsparameter unterscheiden können.

### Die vorgeschlagenen Verfahren umfassen Aspekte der sogenannten Augmented Reality (AR)

Beim Realitäts-Virtualitäts-Kontinuum (nach Paul Milgram et al., 1994) sind die erweiterte Realität (augmented reality, AR) und erweiterte Virtualität (augmented virtuality) Teil der sogenannten gemischten Realität (mixed reality). Während der Begriff Augmented Virtuality kaum von der Fachwelt benutzt wird, werden Augmented Reality und Mixed Reality, selten auch Enhanced Reality, meist synonym verwendet.

Im Gegensatz zur virtuellen Realität, bei welcher der Benutzer komplett in eine virtuelle Welt eintaucht, steht bei der erweiterten Realität die Darstellung zusätzlicher Informationen im Vordergrund. Für die visuelle Modalität führt dies zu wesentlich härteren Anforderungen an die Positionsbestimmung (Tracking) und Kalibrierung.

Unter einem AR-System (kurz ARS) versteht man das System der technischen Bestandteile, die nötig sind, um eine Augmented-Reality-Anwendung aufzubauen: Kamera, Trackinggeräte, Unterstützungssoftware usw.

Die Literatur verwendet meist die Definition der erweiterten Realität von Azuma (http://www.cs.unc.edu/~azuma/ARpresence.pdf):
- Die virtuelle Realität und die Realität sind miteinander kombiniert (teilweise überlagert).
- Interaktivität in Echtzeit.
- Reale und virtuelle Objekte stehen 3-dimensional zueinander in Bezug.

### Source: Wikipedia(https://de.wikipedia.org/wiki/Erweiterte_Realität)

Verfahren gemäß Aspekten der Erfindung können bei einer Vielzahl von Bauteilen verwendet werden. Bei den verschiedenen Walzen, die in einer Papiermaschine zum Einsatz kommen können -und hier speziell bei Funktionswalzen- ist das Verfahren bevorzugt einsetzbar.

Aber auch auf Bauteile, die keine Walzen sind, lässt sich ein Verfahren gemäß Aspekten der Erfindung anwenden.

### Anwendung 1: Saugwalzen - Virtuelle Verstellung des Saugkastens

Es kann vorgesehen sein, dass es sich bei dem Bauteil um eine Saugwalze handelt. Eine solche Saugwalze weist in ihrem Inneren einen Saugkasten auf, sowie eine Verstelleinrichtung zum Einstellen der Position des Saugkasten. Meist kann der Saugkasten dabei so verschoben bzw. gedreht werden, dass ein anderer Umfangsbereich der Saugwalze besaugt wird.

Für die Einstellung wird anhand der Bild- und/oder Videoaufnahme die Ist-Werte der Position des Saugkastens ermittelt und mit der Bild- und/oder Videoaufnahme auf dem Display als virtuelle Position dargestellt werden. Somit wird der real nicht sichtbare Saugkasten auf dem Display virtuell sichtbar gemacht. Das Display und/oder die Berechnungseinheit (2) kann nun insbesondere so ausgeführt sein, dass ein Bediener die virtuelle Position des Saugkastens durch Verschieben verändern kann. Die Verschiebung der virtuellen Position des Saugkastens auf dem Display kann beispielsweise über eine Gestensteuerung erfolgen. Dies ist bei den Touch-Screen Displays aktueller Mobiltelefone oder Tabletts einfach möglich. Außerdem sind auch unerfahrene Bediener aus dem privaten Umfeld mit dieser Gestensteuerung vertraut. Somit kann diese Verschiebung der virtuellen Position auch ohne Detailkenntnisse der Funktionsweise des Bauteils durchgeführt werden.

Die Metainformationen in Form der zum Erzielen dieser Verschiebung geeigneten Einstellungen der Verstelleinrichtung werden daraufhin auf der Display angezeigt. Die Anzeige kann dabei sehr detailliert erfolgen. Insbesondere kann die Bild- und/oder Videoaufnahme des Bauteils mit optischen Hinweisen versehen werden, an welcher Stelle der Verstelleinrichtung genau welche Verstellungen durchgeführt werden sollen. Eine Fehlbedienung kann dabei weitgehen ausgeschlossen werden.

### Anwendung 2: Saugwalzen - Virtuelle Verstellung der Dichtleisten

Es kann vorgesehen sein, dass es sich bei dem Bauteil um eine Saugwalze handelt. Eine solche Saugwalze weist in ihrem Inneren einen Saugkasten auf. Die Saugzone dieses Saugkastens reicht nicht bis an die Walzenränder an Führerseite und Triebseite heran, da diese Ränder im Betrieb nicht durch die Papierbahn bedeckt sind, und ein Einsaugen von Falschluft vermieden werden soll.

Es werden auf einer Papiermaschine aber üblicherweise mehrere verschiedene Produkte hergestellt. Dadurch ändert sich auch die aktuelle Breite der jeweiligen Papierbahn, z.B. durch ein unterschiedliches Schrumpfverhalten. Um dem Rechnung zu tragen, sind in der Saugwalze spezielle Dichtelemente, sogenannte Formatbegrenzer vorgesehen. Durch Verschieben dieser Formatbegrenzer kann die Breite der Saugzone angepasst werden. Diese Formatbegrenzer sind allerdings in der Regel von außen nicht ohne weiteres erkennbar, wodurch eine genaue Positionierung erschwert wird. Aus dem Stand der Technik, insbesondere der EP 2 707 544 ist bekannt, die Formatbegrenzer mit Signalgebern wie z.B. Lasern zu versehen, um durch den Walzenmantel hindurch die Formatbegrenzer erkennen zu können. Der Einbau dieser Signalgeber ist aber mit Kosten verbunden; zudem kann bei verschmutzter Walze das Signal bisweilen nicht immer sicher erkannt werden.

An der Saugwalze ist zudem eine Verstelleinrichtung zum Einstellen der Position der Formatbegrenzer vorgesehen.

Für die Einstellung wird anhand der der Bild- und/oder Videoaufnahme die Ist-Werte der Position des Saugkastens ermittelt und mit der Bild- und/oder Videoaufnahme auf dem Display als virtuelle Position dargestellt werden. Somit werden die real in der Regel nicht sichtbaren Formatbegrenzer auf dem Display virtuell sichtbar gemacht. Das Display und/oder die Berechnungseinheit (2) ist nun insbesondere so ausgeführt ist, dass ein Bediener die virtuelle Position eines oder mehrerer Formatbegrenzer durch Verschieben verändern kann. Die Verschiebung der virtuellen Position des Formatbegrenzers auf dem Display kann beispielsweise über eine Gestensteuerung erfolgen. Dies ist bei den Touch-Screen Displays aktueller Mobiltelefone oder Tabletts einfach möglich. Außerdem sind auch unerfahrene Bediener aus dem privaten Umfeld mit dieser Gestensteuerung vertraut. Somit kann diese Verschiebung der virtuellen Position auch ohne Detailkenntnisse der Funktionsweise des Bauteils durchgeführt werden.

Die Metainformationen in Form der zum Erzielen dieser Verschiebung geeigneten Einstellungen der Verstelleinrichtung werden daraufhin auf dem Display angezeigt. Die Anzeige kann dabei sehr detailliert erfolgen. Insbesondere kann die Bild- und/oder Videoaufnahme des Bauteils mit optischen Hinweisen versehen werden, an welcher Stelle der Verstelleinrichtung genau welche Verstellungen durchgeführt werden sollen. Eine Fehlbedienung kann dabei weitgehen ausgeschlossen werden.

### Anwendung 3: Breitstreckwalzen

Es kann vorgesehen sein, dass es sich bei dem Bauteil um eine Breitstreckwalze handelt. Breitstreckwalzen sollen die Faserstoffbahn in der Breite strecken, um so einen faltenfreien Lauf zu ermöglichen. Derartige Walzen sind beispielsweise in den Schriften DE 20 2005 022 053 U1, DE202005022051 U1 oder DE 50 2015 012 655 beschrieben.

Ihre Wirkung erzielen Breitstreckwalzen in der Regel durch ihre gekrümmte Form. Während die Stärke der Krümmung in der Regel fest vorgegeben ist, kann sie in der Regel in ihrer Lage verändert werden. Je nachdem, ob die Krümmung nach oben ausgerichtet ist, oder etwas entgegen der Bahnlaufrichtung oder in Bahnlaufrichtung geneigt ist, ändert sich die Wirkung der Breitstreckwalze auf die Bahn.

Breitstreckwalzen haben üblicherweise eine Verstelleinrichtung zum Einstellen dieses Anstellwinkels. Es jedoch für den Bediener nicht ohne weiteres erkennbar, in welche Richtung der Anstellwinkel geändert werden muss um eine Erhöhung der Spannung (oder eine Reduzierung) zu erzielen. Auch ist die Einstellvorrichtung häufig durch eine drehbare Einstellschraube realisiert, und es bedarf einiges an Erfahrung, um zu beurteilen, welche Drehrichtung der Einstellschraube den Anstellwinkel in eine gewünschte Richtung verändert. Da bereits eine qualitative Beurteilung der Einstellung schwierig ist, ist eine quantitative Beurteilung, also wie weit der Anstellwinkel in einem bestimmen Fall angepasst werden muss, ohne große Erfahrung nicht zu beurteilen.

In einem Aspekt des hier vorgeschlagenen Verfahrens wird daher durch Bildanalyse der Bild- und/oder Videoaufnahme vom Äußeren der Breitstreckwalze der Ist-Wert des Anstellwinkels ermittelt.

Abhängig von der gewünschten Veränderung des Anstellwinkels können die zum Erzielen dieser Veränderung geeigneten Einstellungen der Verstelleinrichtung auf der Display angezeigt werden.

In einer vorteilhaften Ausführung kann die angezeigte Metainformation rein qualitativ sein. So kann der Bediener beispielsweise als Ziel ,Spannung erhöhen' vorgeben, und die Metainformation gibt die Richtung an, in die er Anstellwinkel geändert werden muss (z.B. "gegen den Uhrzeigersinn") oder die Richtung, in die die Verstelleinrichtung gedreht werden muss ("Rechtsdrehung Einstellschraube"). Vorteilhaft an dieser Ausführung ist, dass die qualitative Information in der Regel durch die Berechnungseinheit rein aus der Geometrie und der Einbausituation der Breitstreckwalze abgeleitet werden kann, ohne dass dafür Informationen der aktuellen Produktion (Bahngeschwindigkeit, Bahnspannung etc.) notwendig sind. Eine derartige Metainformation kann also auch zur Verfügung gestellt werden, wenn keine Anbindung an ein Datenbanksystem vorhanden ist, oder wenn die Verbindung zu diesem Datenbanksystem kurzfristig unterbrochen ist.

In einer anderen vorteilhaften Ausführung kann die angezeigte Metainformation auch quantitative Angaben umfassen. So kann der Bediener beispielsweise als Ziel ,Spannung 5% erhöhen' vorgeben, und die Metainformation gibt die Richtung und Wert an, die er Anstellwinkel geändert werden muss (z.B. "5° gegen den Uhrzeigersinn") oder die Richtung und Wert, in die die Verstelleinrichtung gedreht werden muss ("Zwei Rechtsdrehung der Einstellschraube").

Damit diese quantitativen Angaben eine gute Qualität haben ist es ,eist notwendig, dass die Berechnungseinheit mit einem Datenbanksystem verbunden ist, da für die Ermittlung dieser Metainformationen meist neben der Geometrie und der Einbausituation der Breitstreckwalze auch Informationen der aktuellen Produktion (Bahngeschwindigkeit, Bahnspannung etc.) notwendig sind.

### Anwendung 4: Pick-Up Walzen

Um eine Faserstoffbahn von der Formierzone in die Pressenpartie zu transferieren, wird sie in der Regel von dem sie stützenden Formiersieb auf einen Pressfilz übergeben. Dies geschieht meist mittels einer besaugten Walze der sogenannten Pick-Up Walze. Eine solche Pick-up (Saug-)Walze ist beispielsweise in der DE 199 29 888 A beschrieben. Zum Abnehmen der Bahn wird die Pick-up Walze über einer Verstelleinrichtung so bewegt, dass sie in das Formiersieb leicht eintaucht. Bisher wird die Positionierung der Walze auf Basis der Erfahrung des Bedienpersonals gewählt. Dabei ist weder eine exakte Positionierung noch eine Wiederholbarkeit gewährleistet.

Mittels der Bild- und/oder Videoaufnahme kann die genaue Position der Walze bestimmt werden und darauf basierend geeignete Einstellungen der Verstelleinrichtung auf der Display angezeigt werden.

Insbesondere kann es vorteilhaft sein, wenn ein Datenbanksystem vorgesehen ist, und die Berechnungseinheit zur Ermittlung der geeigneten Einstellungen auf im Datenbanksystem hinterlegte Werte für die Einstellung der Verstelleinrichtung zurückgreift. Dies können beispielsweise historische Werte sein, die bei früheren Produktionen derselben Sorte etc. bereits verwendet wurden. Hierzu ist es insbesondere auch vorteilhaft, wenn die Berechnungseinheit so eingerichtet ist, dass der Ist-Wert des Betriebszustands in dem Datenbanksystem abgespeichert werden kann.

### Anwendung 5: Schaber.

Weitere Bauteile, auf die ein Verfahren gemäß Aspekten der Erfindung angewendet werden können, sind beispielsweise Schaber, insbesondere Kreppschaber bei der Herstellung von Tissuepapier. Diese Schaber weisen in der Regel Verstelleinrichtungen auf, um den Anstellwinkel des Schabers und/oder den Abstand zum Yankeezylinder zu verändern. Diese Parameter sind für das Kreppergebnis essentiell. Bisher war hierfür die Erfahrung des Bedienpersonals unerlässlich, welches die Einstellungen teilweise nach Gehör anhand des Schabergeräusche durchführt.

Durch eine Bildaufnahme des Schabers kann der Winkel und/oder der Abstand der Schabers zum Zylinder ermittelt, und als Metainformation auf dem Display dargestellt werden.

Vorteilhafterweise kann durch einen Vergleich mit Daten aus einem Datenbanksystem auch ein Vorschlag für eine veränderte Einstellung des Schabers auf dem Display dargestellt werden.

Die vorgestellten Beispiele sollen zeigen, dass Verfahren gemäß Aspekten der vorliegenden Erfindung für eine Vielzahl von Anwendungen eingesetzt werden können. Die Erfindung ist dabei aber nicht auf die hier gezeigten Anwendungen beschränkt.

Weitere Metainformationen, die in Verfahren gemäß Aspekten der vorliegenden Erfindung dargestellt werden, können auch Beschreibungen der verschiedenen Bedienelemente sein. So kann insbesondere per AR der Name und die Funktion von Bedienelementen angezeigt werden, um eine Verwechslung zu verhindern.

Konventionelle Beschriftungstafeln verschmutzen mit der Zeit oder lösen sich sogar vom Bauteil ab. Dies kann mittels der Darstellung auf dem Display verhindert werden.

Im Folgenden wird die Erfindung anhand von Figuren weiter erläutert. Die Erfindung ist dabei nicht auf diese Beispiele beschränkt. Die Figuren zeigen im Einzelnen:
Fig.1 zeigt die Draufsicht einer Vorrichtung mit einem Bauteil, das mit einem Verfahren gemäß einem Aspekt der Erfindung eingestellt werden kann
Fig.2 zeigt die Seitenansicht der Vorrichtung aus Fig. 1
Fig.3 zeigt eine Berechnungseinheit zur Durchführung eines Verfahrens gemäß einem weiteren Aspekt der Erfindung

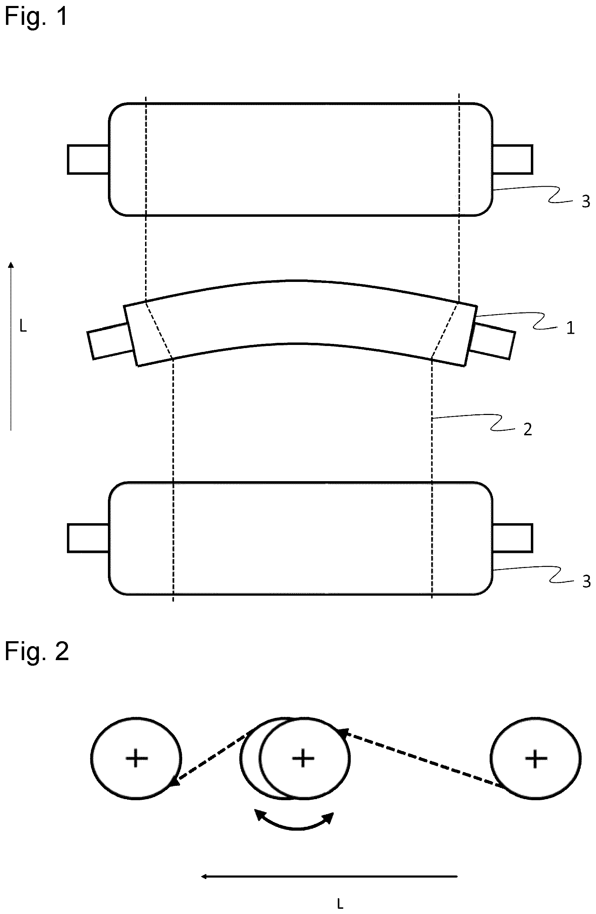

Figur 1 zeigt eine Faserstoffbahn 2, die in Laufrichtung L über zwei Leitwalzen 3 geführt wird. Zwischen den beiden Leitwalzen 3 ist eine Breitstreckwalze 1 angeordnet. Die Breitstreckwalze 1 ist dabei in der Regel gekrümmt ausgeführt. Durch diese Krümmung wird die Wirkung der Breitstreckung der Faserstoffbahn 2 erzielt. In Fig.2 ist diese Vorrichtung von der Seite zu sehen. Eine Winkelverstellung der Breitstreckwalze 1 bewirkt, dass die Ebene, in der die gekrümmte Achse liegt, gedreht wird. Dadurch verändert sich die streckende (oder in anderen Anwendungen: stauchende) Wirkung, die die Breitstreckwalze 1 auf die Faserstoffbahn 2 auswirkt. Die Krümmung der Achse der Breitstreckwalze 1 ist in den Figuren stark überzeichnet. In der Praxis ist diese Krümmung mit bloßem Auge schwer zu erkennen, insbesondere, wenn die Anlage in Betrieb ist, und die Breitstreckwalze 1 zu großen Teilen durch die Faserstoffbahn 2 bedeckt ist. Zudem erfordert es vom Bedienpersonal große Erfahrung, um zu beurteilen, ob eine Winkelverstellung im Uhrzeigersinn oder gegen den Uhrzeigersinn die erwünschte Wirkung, z.B. eine Erhöhung der Spannung bewirkt.

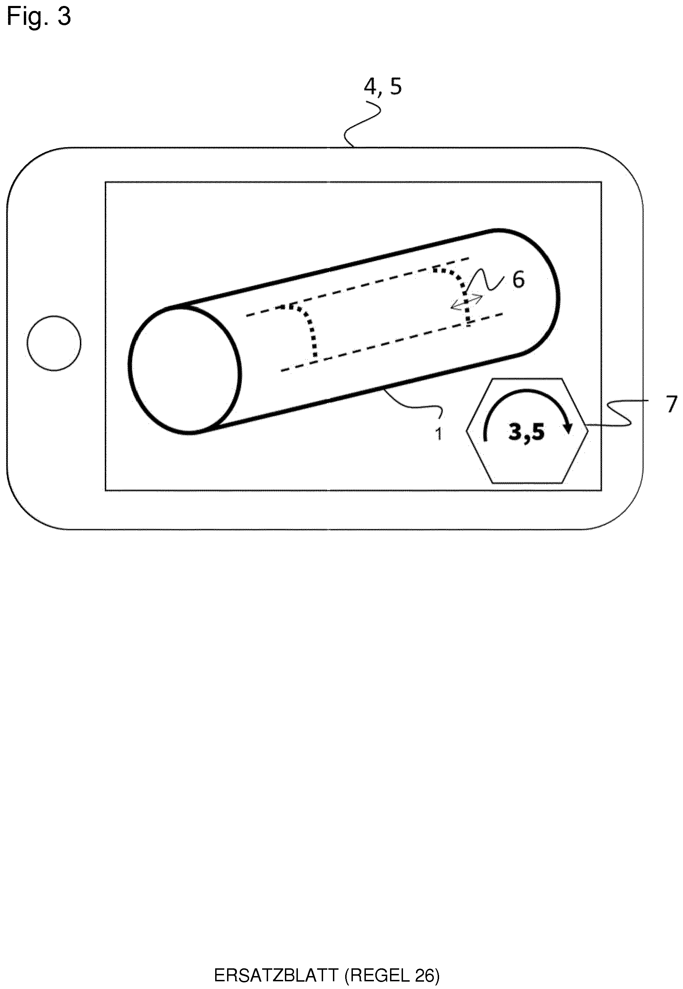

Fig.3 zeigt exemplarisch eine Berechnungseinheit 4 in Form eines Smartphones 4 oder Tabletts 4. Ein solches Gerät ist für die Durchführung von Verfahren gemäß Aspekten der Erfindung sehr geeignet, da darin neben der Berechnungseinheit 4 und dem Display 5 auch noch die Bildaufnahme über die eingebaute Kamera, uns somit alle für das Verfahren wesentlichen Elemente in einem Gerät kombiniert sind. Handelt des sich bei dem Bauteil 1 beispielsweise um eine Saugwalze 1, so können, wie in Fig.3 gezeigt, Ist-Werte der Position der Dichtleisten und/oder Formatbegrenzer mit der Bild- und/oder Videoaufnahme auf dem Display 5 als virtuelle Position 6 dargestellt werden. Über das berührungssensitive Display 5 kann das Bedienpersonal die virtuellen Positionen 6 der Dichtleiste oder des Formatbegrenzers auf dem Display 5 verschieben. Die zum Erzielen dieser Verschiebung geeigneten Einstellungen der Verstelleinrichtung können dann als Metainformation 7 auf der Display 5 angezeigt werden. Dies ermöglicht eine einfache und intuitive Positionierung der Dichtleisten und Formatbegrenzer auch für unerfahrenes Bedienpersonal. Die Gefahr der Fehleinstellung wird dadurch weitgehend vermieden.

### Bezugszeichenliste

- 1: Bauteil, Breitstreckwalze, Saugwalze
- 2: Faserstoffbahn
- 3: Leitwalze
- 4: Berechnungseinheit
- 5: Display
- 6: Virtuelle Position
- 7: Metainformation
- L: Laufrichtung

## Patentansprüche

1. Verfahren zum Einstellen eines Bauteils (1) in Form einer Funktionswalze (1) für eine Maschine zur Herstellung oder Verarbeitung einer Faserstoffbahn (2), wobei das Verfahren die folgenden Schritte umfasst:
- Bild- und/oder Videoaufnahme vom Äußeren des Bauteils (1) und Übermittlung der Aufnahme an eine Berechnungseinheit (4)
- Ermittlung eines Ist-Wertes des Betriebszustands mittels der Berechnungseinheit durch Bildanalyse der Bild- und/oder Videoaufnahme vom Äußeren des Bauteils (1)
**dadurch gekennzeichnet, dass**
das Bauteil (1) zumindest eine Verstelleinrichtung zum Einstellen eines Betriebszustandes des Bauteils aufweist, und das Verfahren weiter den Schritt umfasst:
- Auf Basis der ermittelten Ist-Werte des Betriebszustands: Darstellung von Metainformationen (7) zum Einstellen der Verstelleinrichtung durch Überlagerung mit der Bild- und/oder Videoaufnahme auf einem Display (5)

2. Verfahren nach einem der vorherigen Ansprüche, **dadurch gekennzeichnet, dass** am Äußeren des Bauteils (1) oder in dessen direkter Umgebung ein Markerelement angebracht ist, und dieses Markerelement bei der Bild- und/oder Videoaufnahme miterfasst wird.

3. Verfahren nach einem der vorherigen Ansprüche, **dadurch gekennzeichnet, dass** ein Datenbanksystem vorgesehen ist, und die Berechnungseinheit (4) zur Ermittlung der Metainformationen auf das Datenbanksystem zugreift.

4. Verfahren nach Anspruch 3, **dadurch gekennzeichnet, dass** der Ist-Wert des Betriebszustands in dem Datenbanksystem abgespeichert wird.

5. Verfahren nach einem der vorherigen Ansprüche, **dadurch gekennzeichnet, dass** es sich bei dem Bauteil (1) um eine Saugwalze (1) handelt, welche in ihrem Inneren einen Saugkasten aufweist sowie eine Verstelleinrichtung zum Einstellen der Position des Saugkastens (Betriebszustand), und wobei die Ist-Werte der Position des Saugkastens ermittelt und mit der Bild- und/oder Videoaufnahme auf dem Display als virtuelle Position (6) dargestellt werden, wobei das Display (5) und/oder die Berechnungseinheit (4) so ausgeführt ist, dass bei einer Verschiebung der virtuellen Position (6) des Saugkastens auf dem Display (5) -beispielsweise über eine Gestensteuerung- die zum Erzielen dieser Verschiebung geeigneten Einstellungen (7) der Verstelleinrichtung auf der Display (5) angezeigt werden.

6. Verfahren nach einem der vorherigen Ansprüche, **dadurch gekennzeichnet, dass** es sich bei dem Bauteil (1) um eine Saugwalze (1) handelt, welche eine Verstelleinrichtung zum Einstellen der Position der Dichtleisten und/oder der Formatbegrenzer (Betriebszustand) umfasst, und wobei die Ist-Werte der Position der Dichtleisten und/oder Formatbegrenzer mit der Bild- und/oder Videoaufnahme auf dem Display (5) als virtuelle Position (6) dargestellt werden, wobei das Display (5) und/oder die Berechnungseinheit (4) so ausgeführt ist, dass bei einer Verschiebung der virtuellen Position (6) der Dichtleiste und/oder des Formatbegrenzers auf dem Display (5) -beispielsweise über eine Gestensteuerung- die zum Erzielen dieser Verschiebung geeigneten Einstellungen (7) der Verstelleinrichtung auf der Display (5) angezeigt werden.

7. Verfahren nach einem der Ansprüche 1 bis 4, **dadurch gekennzeichnet, dass** es sich bei dem Bauteil (1) um eine Breitstreckwalze (1) handelt, welche eine Verstelleinrichtung zum Einstellen des Anstellwinkels (Betriebszustand) umfasst, wobei der Ist-Wert des Anstellwinkels ermittelt wird, und wobei abhängig von der gewünschten Veränderung des Anstellwinkels die zum Erzielen dieser Veränderung geeigneten Einstellungen (7) der Verstelleinrichtung auf der Display (5) angezeigt werden.

8. Verfahren nach einem der Ansprüche 1 bis 4, **dadurch gekennzeichnet, dass** es sich bei dem Bauteil (1) um eine Pick-Up-Walze (1) handelt, welche eine Verstelleinrichtung zum Positionieren der Pick-Up-Walze, insbesondere zum Positionieren der Pick-Up-Walze (1) relativ zu einem Formiersieb umfasst, wobei der Ist-Wert der Position ermittelt wird, und wobei geeignete Einstellungen (7) der Verstelleinrichtung auf der Display (5) angezeigt werden.

9. Verfahren nach Anspruch 8, **dadurch gekennzeichnet, dass** ein Datenbanksystem vorgesehen ist, und die Berechnungseinheit zur Ermittlung der geeigneten Einstellungen auf im Datenbanksystem hinterlegte Werte für die Einstellung der Verstelleinrichtung zurückgreift.

## Claims

1. Method for adjusting a component (1) in the form of a functional roller (1) for a machine for producing or processing a fibrous web (2),
wherein the method comprises the following steps:
- image and/or video recording of the exterior of the component (1) and transmission of the recording to a computing unit (4)
- determination of an actual value of the operating condition by means of the computing unit by image analysis of the image and/or video recording of the exterior of the component (1)
**characterised in that**
the component (1) has at least one adjustment device for adjusting an operating state of the component, and the method further comprises the step of:
- Based on the determined actual values of the operating state: display of meta information (7) for adjusting the adjustment device by superimposing it on the image and/or video recording on a display (5)

2. Method according to one of the previous claims, **characterised in that** a marker element is attached to the exterior of the component (1) or in its immediate vicinity, and this marker element is also captured during the image and/or video recording.

3. Method according to one of the previous claims, **characterised in that** a database system is provided and the computing unit (4) accesses the database system to determine the meta information.

4. Method according to claim 3, **characterised in that** the actual value of the operating state is stored in the database system.

5. Method according to one of the preceding claims, **characterised in that** the component (1) is a suction roller (1) which has a suction box inside it and an adjustment device for adjusting the position of the suction box (operating state), and wherein the actual values of the position of the suction box are determined and displayed on the display as a virtual position (6) together with the image and/or video recording, wherein the display (5) and/or the computing unit (4) is designed such that, when the virtual position (6) of the suction box is shifted on the display (5) - for example via gesture control - the settings (7) of the adjustment device suitable for achieving this shift are displayed on the display (5).

6. Method according to one of the previous claims, **characterised in that** the component (1) is a suction roller (1) which comprises an adjustment device for adjusting the position of the sealing strips and/or the format limiters (operating state), and wherein the actual values of the position of the sealing strips and/or format limiters are displayed on the display (5) as a virtual position (6) using the image and/or video recording, wherein the display (5) and/or the computing unit (4) is designed such that, when the virtual position (6) of the sealing strip and/or the format limiter is shifted on the display (5) - for example via gesture control - the settings (7) of the adjustment device suitable for achieving this shift are displayed on the display (5).

7. Method according to one of claims 1 to 4, **characterised in that** the component (1) is a spreader roller (1) which comprises an adjustment device for adjusting the angle of attack (operating state), wherein the actual value of the angle of attack is determined, and wherein, depending on the desired change in the angle of attack, the settings (7) of the adjustment device suitable for achieving this change are displayed on the display (5).

8. Method according to one of claims 1 to 4, **characterised in that** the component (1) is a pick-up roller (1) which comprises an adjustment device for positioning the pick-up roller, in particular for positioning the pick-up roller (1) relative to a forming screen, wherein the actual value of the position is determined and wherein suitable settings (7) of the adjustment device are displayed on the display (5).

9. Method according to claim 8, **characterised in that** a database system is provided, and the calculation unit for determining the suitable settings uses values stored in the database system for the setting of the adjustment device.

## Revendications

1. Procédé de réglage d'un composant (1) sous la forme d'un rouleau fonctionnel (1) pour une machine destinée à la fabrication ou au traitement d'une bande de matière fibreuse (2),
le procédé comprenant les étapes suivantes :
- prise d'images et/ou d'enregistrement vidéo de l'extérieur du composant (1) et transmission de l'enregistrement à une unité de calcul (4)
- détermination d'une valeur réelle de l'état de fonctionnement ( ) à l'aide de l'unité de calcul par analyse de l'image et/ou de la vidéo de l'extérieur de l'élément (1)
**caractérisé en ce que**
le composant (1) comporte au moins un dispositif de réglage pour régler un état de fonctionnement du composant, et le procédé comprend en outre l'étape suivante :
- sur la base des valeurs réelles déterminées de l'état de fonctionnement : la représentation de méta-informations (7) pour le réglage du dispositif de réglage par superposition avec l'enregistrement d'image et/ou vidéo sur un écran (5)

2. Procédé selon l'une des revendications précédentes, **caractérisé en ce qu'**un élément marqueur est apposé à l'extérieur du composant (1) ou dans son environnement direct, et que cet élément marqueur est également enregistré lors de l'enregistrement d'images et/ou de vidéos.

3. Procédé selon l'une des revendications précédentes, **caractérisé en ce qu'**un système de base de données est prévu et que l'unité de calcul (4) accède au système de base de données pour déterminer les méta-informations.

4. Procédé selon la revendication 3, **caractérisé en ce que** la valeur réelle de l'état de fonctionnement est enregistrée dans le système de base de données.

5. Procédé selon l'une des revendications précédentes, **caractérisé en ce que** le composant (1) est un rouleau aspirant (1) qui comporte à l'intérieur une caisse d'aspiration ainsi qu'un dispositif de réglage permettant de régler la position de la caisse d'aspiration (état de fonctionnement), et les valeurs réelles de la position du caisson d'aspiration sont déterminées et représentées avec l'enregistrement d'image et/ou vidéo sur l'écran sous forme de position virtuelle (6), l'écran (5) et/ou l'unité de calcul (4) étant conçus de telle sorte que, lors d'un déplacement de la position virtuelle (6) du caisson d'aspiration sur l'écran (5) - par exemple via une commande gestuelle - les réglages (7) du dispositif de réglage appropriés pour obtenir ce déplacement sont affichés sur l'écran (5).

6. Procédé selon l'une des revendications précédentes, **caractérisé en ce que** le composant (1) est un rouleau d'aspiration (1) qui comprend un dispositif de réglage pour régler la position des barres d'étanchéité et/ou des limiteurs de format (état de fonctionnement), et les valeurs réelles de la position des barres d'étanchéité et/ou des limiteurs de format sont représentées sur l'écran (5) sous forme de position virtuelle (6) avec l'enregistrement d'image et/ou vidéo, l'écran (5) et/ou l'unité de calcul (4) étant conçus de telle sorte que, lors d'un déplacement de la position virtuelle (6) de la barre d'étanchéité et/ou du limiteur de format sur l'écran (5) - par exemple via une commande gestuelle - les réglages (7) du dispositif de réglage appropriés pour obtenir ce déplacement sont affichés sur l'écran (5).

7. Procédé selon l'une des revendications 1 à 4, **caractérisé en ce que** le composant (1) est un rouleau élargisseur (1) qui comprend un dispositif de réglage pour régler l'angle d'attaque (état de fonctionnement), la valeur réelle de l'angle d'attaque étant déterminée et, en fonction de la modification souhaitée de l'angle d'attaque, les réglages (7) du dispositif de réglage appropriés pour obtenir cette modification de manière e étant affichés sur l'écran (5).

8. Procédé selon l'une des revendications 1 à 4, **caractérisé en ce que** le composant (1) est un rouleau ramasseur (1) qui comprend un dispositif de réglage pour positionner le rouleau ramasseur, en particulier pour positionner le rouleau ramasseur (1) par rapport à un tamis de formage, la valeur réelle de la position étant déterminée et les réglages appropriés (7) du dispositif de réglage étant affichés sur l'écran (5).

9. Procédé selon la revendication 8, **caractérisé en ce qu'**un système de base de données est prévu et que l'unité de calcul utilise les valeurs enregistrées dans le système de base de données pour le réglage du dispositif de réglage afin de déterminer les réglages appropriés.
